# EUROPÄISCHE PATENTSCHRIFT

(11) **EP 4 281 693 B1**
(45) Veröffentlichungstag und Bekanntmachung des Hinweises auf die Patenterteilung: **02.12.2026**
(21) Anmeldenummer: 22701231.7
(22) Anmeldetag: 20.01.2022
(51) Int. Cl.: F16K 31/06

(54) **VERFAHREN ZUM REGELN DES BETRIEBS EINES ZUR DURCHFLUSSMENGENSTEUERUNG EINGESETZTEN MAGNETVENTILS EINER LANDWIRTSCHAFTLICHEN AUSBRINGMASCHINE**
METHOD FOR CONTROLLING THE OPERATION OF A SOLENOID VALVE OF AN AGRICULTURAL SPREADING MACHINE, THE SOLENOID VALVE BEING USED TO CONTROL A FLOW RATE
PROCÉDÉ POUR RÉGULER LE FONCTIONNEMENT D'UNE ÉLECTROVANNE D'UNE MACHINE AGRICOLE D'ÉPANDAGE, CETTE ÉLECTROVANNE SERVANT À RÉGULER LE DÉBIT

(30) Priorität: 22.01.2021 DE 102021101311
(43) Veröffentlichungstag der Anmeldung: 29.11.2023
(73) Patentinhaber: Amazonen-Werke H. Dreyer SE & Co. KG, 49205 Hasbergen (DE)
(72) Erfinder: MINDRUP, Tobias, 49080 Osnabrück (DE); TRENTMANN, Markus, 49134 Wallenhorst (DE); KÜHN, Christoph, 49186 Bad Iburg (DE); HEER, Jochen, 49074 Osnabrück (DE); DEMBECK, Achim, 49191 Osnabrück (DE); AUSTERMANN, Stefan, 48291 Telgte (DE)
(86) Internationale Anmeldenummer: PCT/EP2022/051172
(87) Internationale Veröffentlichungsnummer: WO 2022/157216

(56) Entgegenhaltungen:
- EP-A1- 1 651 485
- EP-A1- 2 102 465
- EP-B1- 1 651 485
- EP-B1- 2 102 465
- EP-B9- 2 227 949

## Beschreibung

Die Erfindung betrifft ein Verfahren zum Regeln des Betriebs eines zur Durchflussmengensteuerung eingesetzten Magnetventils einer landwirtschaftlichen Streumaschine nach dem Oberbegriff des Patentanspruchs 1, ein Verfahren zum Betreiben von mehreren zur Durchflussmengensteuerung eingesetzten Magnetventilen einer landwirtschaftlichen Ausbringmaschine nach dem Oberbegriff des Patentanspruchs 13 und eine landwirtschaftliche Ausbringmaschine nach dem Oberbegriff des Patentanspruchs 15.

Magnetventile von landwirtschaftlichen Ausbringmaschinen, wie beispielsweise Feldspritzen, weisen üblicherweise fertigungsbedingte Toleranzen auf. Die Toleranzen können beispielsweise die Querschnittsfläche der Ventilöffnungen, den Hub des Ventilankers, die Induktivität und den Widerstand der Spule und die Reibung am Ventilanker betreffen. Während der Durchflussmengensteuerung werden die Magnetventile in geeigneter Weise bestromt, wobei durch das Bestromen eines Magnetventils eine Bewegung des Ventilankers veranlasst wird. Die Toleranzen der Magnetventile können einen erheblichen Einfluss auf die Menge der zu den Ausbringelementen der landwirtschaftlichen Ausbringmaschine geförderten Ausbringflüssigkeit haben. Die fertigungsbedingten Toleranzen der Magnetventile führen also zu Abweichungen zwischen der beabsichtigten Ausbringmenge und der tatsächlichen Ausbringmenge während eines Ausbringvorgangs.

Aufgrund der Vielzahl von Öffnungs- und Schließbewegungen des Ventilankers kommt es bei Magnetventilen, welche pulsweitenmoduliert oder pulsweitenfrequenzmoduliert bestromt werden, zu besonders hohen Abweichungen zwischen der beabsichtigten Ausbringmenge und der tatsächlichen Ausbringmenge während eines Ausbringvorgangs. Bei großen Leitungslängen, wie es beispielsweise bei Feldspritzen der Fall ist, bestehen zusätzlich Spannungsunterschiede zwischen den einzelnen Magnetventilen. Im Betrieb wirkt sich dies ebenfalls auf den Volumenstrom aus.

Die Druckschrift EP 2 227 949 B9 beschreibt ein Kalibrierverfahren zur Kompensation von fertigungsbedingten Toleranzen bei Magnetventilen. Im Rahmen der Kalibrierung werden elektrische Prozessgrößen, wie beispielsweise das Tastverhältnis eines PWM-Signals angepasst, um die fertigungsbedingten Toleranzen auszugleichen. Zur Kalibrierung sind ventilspezifische Messungen zu Durchlassmengen oder Druckverhältnissen erforderlich. Der Kalibrierung wird also der Einfluss der Bestromung auf die tatsächliche Durchflussregulierung zugrunde gelegt. Eine derartige Ventilkalibrierung ist jedoch vergleichsweise zeitaufwendig und teilweise ungenau.

Die EP 2 102 465 A1 offenbart ein Verfahren und eine Vorrichtung zur Steuerung eines elektromagnetischen Ventils, insbesondere in einem Kraftfahrzeug, das üblicherweise zur Dosierung von Flüssigkeiten, wie beispielsweise Kraftstoff und/oder Flüssigkeiten, die in Verbindung mit einer Abgasnachbehandlung verwendet werden, eingesetzt wird.

In der EP 1 651 485 A1 wird ein Verfahren zur Herstellung und/oder Justage eines elektromagnetisch ansteuerbaren Stellgeräts offenbart, welches zum Regeln des Durchflusses eines Fluids geeignet ist, insbesondere eines hydraulischen oder pneumatischen Analogventils oder eines analogisierten Schaltventils.

Die der Erfindung zugrundeliegende Aufgabe besteht somit darin, den Einfluss von fertigungsbedingten Toleranzen von Magnetventilen auf die Genauigkeit bei der Durchflussmengensteuerung an landwirtschaftlichen Ausbringmaschinen zu reduzieren.

Die Aufgabe wird gelöst durch ein Verfahren der eingangs genannten Art, wobei im Rahmen des erfindungsgemäßen Verfahrens die zeitliche Entwicklung des während des Regelungsvorgangs durch das Magnetventil fließenden Stroms ermittelt wird. Unter Berücksichtigung der ermittelten zeitlichen Entwicklung des während des Regelungsvorgangs durch das Magnetventil fließenden Stroms wird dann eine ventilspezifische Bestromungsvorgabe für den geregelten Betrieb des Magnetventils ermittelt. Die Erfindung macht sich die Erkenntnis zunutze, dass über die ventilspezifische Bestromungsvorgabe der Einfluss von Fertigungstoleranzen auf das Verhalten und den Betrieb des Magnetventils ausgeglichen werden können. Es sind somit keine ventilspezifischen Messungen zu Durchlassmengen oder Druckverhältnissen zur Ventilregelung erforderlich. Der Einfluss von fertigungsbedingten Toleranzen eines Magnetventils auf die Durchflussmenge wird somit im Rahmen des Regelungsvorgangs eliminiert oder zumindest erheblich reduziert.

Das Ermitteln der zeitlichen Entwicklung des während des Regelungsvorgangs durch das Magnetventil fließenden Stroms erfolgt vorzugsweise durch eine Steuerungseinrichtung der Ausbringmaschine. Das Ermitteln der ventilspezifischen Bestromungsvorgabe erfolgt vorzugsweise ebenfalls durch die Steuerungseinrichtung der Ausbringmaschine. Die zeitliche Entwicklung des durch das Magnetventil fließenden Stroms kann über eine Stromstärken-Abtastung erfolgen.

Das Magnetventil kann beispielsweise zur Düsenschaltung eingesetzt werden. Die landwirtschaftliche Ausbringmaschine kann beispielsweise eine Feldspritze sein. Vorzugsweise weist die landwirtschaftliche Ausbringmaschine eine Vielzahl von Magnetventilen auf, deren Betrieb mittels des Verfahrens geregelt wird.

Wenn der Betrieb eines stromlos geschlossenen Magnetventils geregelt wird, wird durch das Bestromen des Magnetventils während des Regelungsvorgangs eine Öffnungsbewegung des Ventilankers verursacht. Wenn der Betrieb eines stromlos geöffneten Magnetventils geregelt wird, wird durch das Bestromen des Magnetventils während des Regelungsvorgangs eine Schließbewegung des Ventilankers verursacht.

In einer bevorzugten Ausführungsform des erfindungsgemäßen Verfahrens erfolgt das Bestromen des Magnetventils in dem geregelten Betrieb des Magnetventils unter Einhaltung der ermittelten ventilspezifischen Bestromungsvorgabe. Wenn die Bestromungsvorgabe während des Bestromens des Magnetventils eingehalten wird, werden die Einflüsse der fertigungsbedingten Toleranzen des Magnetventils auf die Durchflussregulierung eliminiert oder zumindest reduziert. Beim Bestromen des Magnetventils unter Einhaltung der ermittelten ventilspezifischen Bestromungsvorgabe kann somit beispielsweise der Einfluss einer fertigungsbedingten Hublängenabweichung des Ventilankers auf die Durchflussregulierung reduziert werden. Alternativ oder zusätzlich kann durch die Einhaltung der ermittelten ventilspezifischen Bestromungsvorgabe der Einfluss einer fertigungsbedingten Induktivitätsabweichung oder einer fertigungsbedingten Widerstandsabweichung der Spule ausgeglichen werden. Ferner kann der Einfluss einer zu hohen oder zu geringen Reibung am Ventilanker auf die Durchflussregulierung durch die Einhaltung der ermittelten ventilspezifischen Bestromungsvorgabe ausgeglichen werden.

In einer anderen bevorzugten Ausführungsform des erfindungsgemäßen Verfahrens wird die ermittelte zeitliche Entwicklung des während des Regelungsvorgangs durch das Magnetventil fließenden Stroms zum Erfassen eines Endlageeinnahmezeitpunkts ausgewertet. Zu dem Endlageeinnahmezeitpunkt nimmt der Ventilanker während des Regelungsvorgangs nach einer durch die Bestromung verursachten Bewegung eine Endlage ein. Beim Ermitteln der ventilspezifischen Bestromungsvorgabe für den geregelten Betrieb des Magnetventils wird dann der erfasste Endlageeinnahmezeitpunkt berücksichtigt. In der Endlage kann ein Anschlagen des Ventilankers an einer Anschlagsfläche erfolgen. Wenn der Ventilanker in der Endlage an einer Anschlagsfläche anschlägt, kann dieser Anschlag über eine Auswertung des zeitlichen Stromverlaufs detektiert werden. Durch die ventilspezifische Bestromungsvorgabe können die Zeitpunkte, zu welchen das Magnetventil vollständig geöffnet oder geschlossen ist, korrigiert werden, sodass fertigungsbedingte Toleranzen am Magnetventil ausgeglichen werden. Die ventilspezifische Bestromungsvorgabe sorgt dafür, dass der Ventilanker während des Betriebs die Endlage innerhalb eines Toleranzzeitfensters um die gewünschten Zeitpunkte herum einnimmt, sodass eine präzise Ventilsteuerung umgesetzt werden kann. Der Ventilanker kann zwei Endlagen einnehmen, eine Offenstellung, in welcher das Magnetventil vollständig geöffnet ist, und eine Geschlossenstellung, in welcher das Magnetventil vollständig geschlossen ist. Wenn der Betrieb eines stromlos geschlossenen Magnetventils geregelt wird, befindet sich das Magnetventil zu dem ermittelten Endlageeinnahmezeitpunkt in einem vollständig geöffneten Zustand. Wenn der Betrieb eines stromlos geöffneten Magnetventils geregelt wird, befindet sich das Magnetventil zu dem ermittelten Endlageeinnahmezeitpunkt in einem vollständig geschlossenen Zustand.

Bei einer weiteren bevorzugten Ausführungsform des erfindungsgemäßen Verfahrens umfasst das Auswerten der ermittelten zeitlichen Entwicklung des während des Regelungsvorgangs durch das Magnetventil fließenden Stroms das Identifizieren einer spezifischen Stromstärkenänderung in der zeitlichen Entwicklung des während des Regelungsvorgangs durch das Magnetventil fließenden Stroms. Die spezifische Stromstärkenänderung, aus welcher man ableiten kann, dass der Ventilanker die Endlage eingenommen hat, kann ein Wendepunkt, eine spezifische Krümmung oder ein lokales Extremum, insbesondere ein Minimum oder ein Maximum, im Stromverlauf sein. Die spezifische Stromstärkenänderung kann auch ein abrupter, temporärer Abfall oder Anstieg des durch das Magnetventil fließenden Stroms sein. Wenn die Abtastrate bei der Ermittlung der zeitlichen Entwicklung des durch das Magnetventil fließenden Stroms zu gering ist, um die spezifische Änderung, beispielsweise das lokale Minimum, zu erfassen, kann anhand der gegebenen Messpunkte die Kurve approximiert werden, wenn der qualitative Kurvenverlauf der Steuerungseinrichtung bekannt ist.

Es ist darüber hinaus ein erfindungsgemäßes Verfahren bevorzugt, bei welchem die zeitliche Entwicklung der an dem Magnetventil anliegenden Spannung zum Erfassen eines Endlageeinnahmezeitpunkts, zu welchem der Ventilanker während des Regelungsvorgangs nach einer durch eine Bestromungsunterbrechung verursachten Bewegung eine Endlage einnimmt, ausgewertet wird. Beim Ermitteln der ventilspezifischen Bestromungsvorgabe für den geregelten Betrieb des Magnetventils wird vorzugsweise der auf diese Weise erfasste Endlageeinnahmezeitpunkt berücksichtigt. Das Auswerten der ermittelten zeitlichen Entwicklung der an dem Magnetventil anliegenden Spannung umfasst vorzugsweise das Identifizieren einer spezifischen Spannungsänderung in der zeitlichen Entwicklung der während des Regelungsvorgangs an dem Magnetventil anliegenden Spannung. Die spezifische Spannungsänderung, aus welcher man ableiten kann, dass der Ventilanker die Endlage eingenommen hat, kann ein Wendepunkt, eine spezifische Krümmung oder ein lokales Extremum, insbesondere ein Minimum oder ein Maximum, im Spannungsverlauf sein. Die spezifische Spannungsänderung kann auch ein abrupter, temporärer Abfall oder Anstieg der an dem Magnetventil anliegenden Spannung sein.

In einer anderen bevorzugten Ausführungsform des erfindungsgemäßen Verfahrens wird ein Bestromungsstartzeitpunkt ermittelt, zu welchem die Bestromung des Magnetventils während des Regelungsvorgangs zum Veranlassen der Bewegung des Ventilankers gestartet wird. Beim Ermitteln der ventilspezifischen Bestromungsvorgabe für den geregelten Betrieb des Magnetventils wird der ermittelte Bestromungsstartzeitpunkt berücksichtigt. Bei stromlos geschlossenen Ventilen bezieht sich der Bestromungsstartzeitpunkt auf eine Bestromung, welche eine Öffnungsbewegung des Ventilankers veranlasst. Bei stromlos geschlossenen Ventilen bezieht sich der Bestromungsstartzeitpunkt auf eine Bestromung, welche eine Schließbewegung des Ventilankers veranlasst. Der Bestromungsstartzeitpunkt ist der Zeitpunkt, an welchem eine Spannung an das Magnetventil angelegt wird, um eine Stromeinprägung und somit eine Ankerbewegung zu verursachen.

In einer Weiterbildung des erfindungsgemäßen Verfahrens wird eine ventilspezifische Anzugszeit des Ventilankers auf Grundlage des ermittelten Bestromungsstartzeitpunkts und des ermittelten Endlageeinnahmezeitpunkts ermittelt, wobei die Anzugszeit die Zeitdauer zwischen dem Bestromungsstartzeitpunkt und dem Endlageeinnahmezeitpunkt betrifft. Beim Ermitteln der ventilspezifischen Bestromungsvorgabe für den geregelten Betrieb des Magnetventils wird die ermittelte ventilspezifische Anzugszeit des Ventilankers berücksichtigt. Im pulsweitenmodulierten Betrieb oder im pulsweitenfrequenzmodulierten Betrieb wirkt sich die Anzugszeit besonders auf die Genauigkeit des Durchflussvolumenstroms aus. Die Ansteuerung des Magnetventils während der Öffnungsphase erfolgt in diesem Fall über ein hochfrequentes PWM-Signal. Wenn die Anzugszeit zu kurz oder zu lang ist, ist eine Verringerung oder Erhöhung des Tastverhältnisses bzw. des Duty Cycle während der Anzugszeit erforderlich, um die Abweichung der tatsächlichen Anzugszeit des Magnetventils von einer Soll-Anzugszeit zu korrigieren. Initial sollte ein Tastverhältnis eingestellt werden, welches kleiner als 100 % ist, sodass in beide Richtungen eine ausreichende Regelreserve vorhanden ist. Beispielsweise kann ein sinnvolles initiales Tastverhältnis bei 16 kHz Grundfrequenz 80 % betragen. Der Durchfluss kann somit durch eine Anpassung des Tastverhältnisses in beide Richtungen angepasst werden. Im Rahmen der Anzugszeitermittlung wird die Dauer zwischen dem Einschalten der Spannung und dem Erreichen der Ankerendlage bestimmt. Der Zeitpunkt des Einschaltens der Spannung wird von der Steuerungseinrichtung vorgegeben und ist somit bekannt. Das Erreichen der Endlage des Ventilankers wird durch den charakteristischen Stromverlauf erkannt. Es kann ausreichen, die Anzugszeit während nur eines Schaltvorgangs des Magnetventils zu ermitteln. Es ist auch möglich, die Anzugszeit über eine vorgegebene Anzahl an Schaltvorgängen zu mitteln. In diesem Fall kann eine mittlere Anzugszeit durch eine Mittelwertbildung über mehrere Schaltvorgänge von der Steuerungseinrichtung berechnet werden. Insbesondere im Fall von Unregelmäßigkeiten oder Streuungen bei den Anzugszeiten eines Magnetventils kann durch die Mittelwertbildung der Einfluss der variierenden Anzugszeiten auf die Durchflussmengenregulierung reduziert werden. Die Ermittlung der Anzugszeit kann auch während oder erst nach einem abgeschlossenen Schaltvorgang erfolgen. Insbesondere bei einem verrauschten Signal ist die Anzugszeitermittlung während oder nach einem abgeschlossenen Schaltvorgang vorteilhaft.

Das Verfahren wird ferner dadurch vorteilhaft weitergebildet, dass durch die Einhaltung der Bestromungsvorgabe in dem geregelten Betrieb des Magnetventils die auf die ventilspezifische Anzugszeit zurückgehende Abweichung der Durchflussmenge in Bezug auf eine sich bei einer Soll-Anzugszeit ergebende Soll-Durchflussmenge ausgeglichen wird. Die Bestromungsvorgabe kann beispielsweise geänderte Bestromungsstartzeitpunkte oder eine geänderte Stromeinprägung während der Anzugszeit betreffen. Beispielsweise kann die Bestromungsvorgabe eine verstärkte oder eine abschwächte Stromeinprägung während der Anzugzeit vorgeben, sodass die Ankerbewegung verzögert oder beschleunigt wird. Über die Anpassung der Anzugszeit eines Magnetventils kann die Soll-Durchflussmenge also trotz fertigungsbedingter Toleranzen vergleichsweise präzise eingehalten werden. Die Soll-Anzugszeit kann ein Mittelwert von Anzugszeiten mehrerer anderer Magnetventile sein. Die Soll-Anzugszeit kann auch von einem anderen Referenzventil vorgegeben werden.

In einer anderen bevorzugten Ausführungsform des erfindungsgemäßen Verfahrens wird ein Bestromungsunterbrechungszeitpunkt ermittelt, zu welchem die Bestromung des Magnetventils während des Regelungsvorgangs zum Veranlassen einer Bewegung des Ventilankers unterbrochen wird. Beim Ermitteln der ventilspezifischen Bestromungsvorgabe für den geregelten Betrieb des Magnetventils wird der ermittelte Bestromungsunterbrechungszeitpunkt berücksichtigt. Bei stromlos geschlossenen Ventilen bezieht sich der Bestromungsunterbrechungszeitpunkt auf eine Bestromungsunterbrechung, welche eine Schließbewegung des Ventilankers veranlasst. Bei stromlos geöffneten Ventilen bezieht sich der Bestromungsunterbrechungszeitpunkt auf eine Bestromungsunterbrechung, welche eine Öffnungsbewegung des Ventilankers veranlasst. Der Bestromungsunterbrechungszeitpunkt ist der Zeitpunkt, an welchem die Anlage einer Spannung an dem Magnetventil unterbrochen wird, um auch die Stromeinprägung zu unterbrechen.

In einer Weiterbildung des erfindungsgemäßen Verfahrens wird eine ventilspezifische Abfallzeit des Ventilankers auf Grundlage des ermittelten Bestromungsunterbrechungszeitpunkts und eines ermittelten Endlageeinnahmezeitpunkts ermittelt, wobei die Abfallzeit die Zeitdauer zwischen dem Bestromungsunterbrechungszeitpunkt und dem Endlageeinnahmezeitpunkt betrifft. Beim Ermitteln der ventilspezifischen Bestromungsvorgabe für den geregelten Betrieb des Magnetventils wird die ermittelte ventilspezifische Abfallzeit des Magnetventils berücksichtigt. Im PWFM-Betrieb wirkt sich die Abfallzeit besonders auf die Genauigkeit des Volumenstroms aus. Wenn die Abfallzeit zu kurz oder zu lang ist, ist eine Verringerung oder Erhöhung des Tastverhältnisses bzw. Duty Cycle erforderlich, um den Durchfluss zu korrigieren.

In einer anderen vorteilhaften Weiterbildung des erfindungsgemäßen Verfahrens wird durch die Einhaltung der Bestromungsvorgabe in dem geregelten Betrieb des Magnetventils die auf die ventilspezifische Abfallzeit zurückgehende Abweichung der Durchflussmenge in Bezug auf eine sich bei einer Soll-Abfallzeit ergebende Soll-Durchflussmenge ausgeglichen. Die Soll-Abfallzeit kann beispielsweise ein Mittelwert von Abfallzeiten mehrerer anderer Magnetventile sein. Die Soll-Abfallzeit kann auch von einem Referenzventil vorgegeben werden.

In einer vorteilhaften Ausführungsform des erfindungsgemäßen Verfahrens ist die während des Regelungsvorgangs an das Magnetventil angelegte Spannung pulsweitenmoduliert und das Ermitteln einer ventilspezifischen Bestromungsvorgabe für den geregelten Betrieb des Magnetventils umfasst das Ermitteln eines ventilspezifischen Modulationsmusters. Das ventilspezifische Modulationsmuster kann beispielsweise angepasste Bestromungsstartzeitpunkte und/oder angepasste Bestromungsunterbrechungszeitpunkte vorgeben, um eine frühere oder spätere Ankerbewegung zu veranlassen. Ferner kann das ventilspezifische Modulationsmuster ein angepasstes Tastverhältnis bzw. einen angepassten Duty Cycle während der Anzugszeit vorgeben, um die Ankerbewegung zu beschleunigen oder zu verzögern.

In einer anderen vorteilhaften Weiterbildung des erfindungsgemäßen Verfahrens werden beim Ermitteln des ventilspezifischen Modulationsmusters die Bestromungsstartzeitpunkte für den geregelten Betrieb des Magnetventils unter Berücksichtigung der ventilspezifischen Anzugszeit des Ventilankers festgelegt. Alternativ oder zusätzlich werden beim Ermitteln des ventilspezifischen Modulationsmusters die Bestromungsunterbrechungszeitpunkte für den geregelten Betrieb des Magnetventils unter Berücksichtigung der ventilspezifischen Abfallzeit des Ventilankers festgelegt. Eine von einem Sollwert abweichende Anzugszeit eines Magnetventils kann auch dadurch kompensiert werden, dass eine stärkere oder schwächere Stromeinprägung während der Anzugszeit umgesetzt wird und somit die Anzugszeit verkürzt oder verlängert wird.

Eine von einem Sollwert abweichende Anzugszeit eines Magnetventils kann auch dadurch kompensiert werden, dass der Bestromungsstartzeitpunkt vorgezogen oder nach hinten verlegt wird. Die Öffnungsbewegung des Ventilankers wird dadurch früher oder später veranlasst. Eine von einem Sollwert abweichende Abfallzeit eines Magnetventils kann auch dadurch kompensiert werden, dass der Bestromungsunterbrechungszeitpunkt vorgezogen oder nach hinten verlegt wird. Die Schließbewegung des Ventilankers wird dadurch früher oder später veranlasst. Alternativ oder zusätzlich kann die an das Magnetventil angelegte pulsweitenmodulierte Spannung zumindest temporär auch mit einem zusätzlichen pulsweitenmodulierten Spannungssignal überlagert werden, sodass die Anzugszeit und/oder die Abfallzeit verändert werden. Die Überlagerung kann eine hohe Grundfrequenz, beispielsweise 16 kHz, aufweisen, wobei die normale PWM-Frequenz zum Schalten des Magnetventils beispielsweise unter 100 Hertz liegt.

Die der Erfindung zugrundeliegende Aufgabe wird ferner durch ein Verfahren zum Betreiben von mehreren zur Durchflussmengensteuerung eingesetzten Magnetventilen der eingangs genannten Art gelöst, wobei der Betrieb der Magnetventile mittels eines Verfahrens nach einer der vorstehend beschriebenen Ausführungsformen geregelt wird. Hinsichtlich der Vorteile und Modifikationen des erfindungsgemäßen Verfahrens zum Betreiben von mehreren zur Durchflussmengensteuerung eingesetzten Magnetventilen wird somit zunächst auf die Vorteile und Modifikationen des erfindungsgemäßen Verfahrens zum Regeln des Betriebs eines zur Durchflussmengensteuerung eingesetzten Magnetventils verwiesen.

Wenn in einem Spritzgestänge alle Düsen den gleichen Volumenstrom-Sollwert haben, sollen durch die Regelung des Betriebs der Magnetventile möglichst geringe Variationskoeffizienten erreicht werden, sodass sich an den Magnetventilen eine hohe Mengentreue einstellt.

In einer bevorzugten Ausführungsform des erfindungsgemäßen Verfahrens werden die ventilspezifischen Bestromungsvorgaben für den geregelten Betrieb der Magnetventile derart ermittelt, dass die Einflüsse der voneinander abweichenden ventilspezifischen Anzugszeiten der jeweiligen Magnetventile auf die Durchflussmenge ausgeglichen werden. Alternativ oder zusätzlich werden die ventilspezifischen Bestromungsvorgaben für den geregelten Betrieb der Magnetventile derart ermittelt, dass die Endlageeinnahmezeitpunkte, zu welchen die Ventilanker der jeweiligen Magnetventile eine Endlage einnehmen, aufeinander abgestimmt werden. Die Soll-Anzugszeit kann beispielsweise von dem langsamsten Magnetventil im Gestänge vorgegeben werden oder ein Mittelwert der Anzugszeiten mehrerer oder sämtlicher Magnetventile des Gestänges sein. In der Mitte eines Gestänges sind die Spannungen an den Magnetventilen häufig größer als außen. Die unterschiedlichen Spannungen an den Magnetventilen führen zu unterschiedlichen Anzugszeiten. In diesem Fall kann als Soll-Anzugszeit das langsamste Magnetventil im Gestänge die Soll-Anzugszeit vorgeben. Weitere Ursachen für unterschiedliche Anzugszeiten sind beispielsweise Hubtoleranzen des Ventilankers und unterschiedliche Federkonstanten der Rückstellfedern der Magnetventile. Ferner ist der an den Magnetventilen anliegende Fluiddruck in der Gestängemitte häufiger größer als außen. Die unterschiedliche Drücke führen zu unterschiedlichen Ausbringmengen. Um die Ausbringmengen über die gesamte Gestängebreite aneinander anzupassen, können für außenliegenden Magnetventile beispielsweise längere Anzugszeiten vorgegeben werden als für innenliegende bzw. in der Mitte angeordnete Magnetventile.

Die Soll-Anzugzeit kann bei mehreren oder sämtlichen zur Durchflussmengensteuerungen eingesetzten Magnetventilen einer landwirtschaftlichen Ausbringmaschine identisch sein. Ferner kann sich die Soll-Anzugszeit einzelner Magnetventile voneinander unterscheiden. Die Soll-Anzugszeit eines Magnetventils kann abhängig sein von dessen Anordnung im Spritzgestänge und somit von dem am Magnetventil anliegenden Fluiddruck bzw. von der Abweichung des anliegenden Fluiddrucks von einem Soll-Druck. Der an den Magnetventilen eines Spritzgestänges anliegende Fluiddruck nimmt von der Gestängemitte aus nach außen hin ab. Um einen konstante Ausbringmenge über die Breite des Spritzgestänges zu erreichen, kann die Soll-Anzugszeit der Magnetventile abhängig sein von deren Positionierung am Spritzgestänge. Beispielsweise kann die Soll-Anzugszeit von der Gestängemitte aus nach außen hin abnehmen, sodass die Zeitspanne, in welcher die jeweiligen Magnetventile geöffnet sind, von der Gestängemitte aus nach außen hin zunimmt und somit der Einfluss des von der Gestängemitte aus nach außen hin abnehmenden Fluiddrucks an den Magnetventilen auf die Durchflussmenge durch eine angepasste ventilspezifische Anzugszeit ausgeglichen wird.

Die der Erfindung zugrundeliegende Aufgabe wird ferner durch eine landwirtschaftliche Ausbringmaschine der eingangs genannten Art gelöst, wobei die Steuerungseinrichtung der erfindungsgemäßen landwirtschaftlichen Ausbringmaschine dazu eingerichtet ist, ein Regeln des Betriebs der Magnetventile gemäß einem der vorstehend beschriebenen Ausführungsformen und/oder einen Betrieb der Magnetventile gemäß einem vorstehend beschriebenen Verfahren zu veranlassen. Hinsichtlich der Vorteile und Modifikationen der landwirtschaftlichen Ausbringmaschine wird auf die Vorteile und Modifikationen des erfindungsgemäßen Verfahrens zum Regeln des Betriebs eines zur Durchflussmengensteuerung eingesetzten Magnetventils und auf die Vorteile und Modifikationen des erfindungsgemäßen Verfahrens zum Betreiben von mehreren zur Durchflussmengensteuerung eingesetzten Magnetventilen verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein geschlossenes Magnetventil einer erfindungsgemäßen landwirtschaftlichen Ausbringmaschine in einer schematischen Darstellung;
- Fig. 2: das in der Fig. 1 abgebildete Magnetventil in einem geöffneten Zustand in einer schematischen Darstellung;
- Fig. 3: zeitliche Entwicklungen der an einem Magnetventil anliegenden Spannung, des durch das Magnetventil fließenden Stroms und der Ankerposition des Ventilankers des Magnetventils in einer schematischen Diagrammdarstellung;
- Fig. 4: eine schematische Darstellung des erfindungsgemäßen Verfahrens zum Regeln des Betriebs eines Magnetventils einer landwirtschaftlichen Ausbringmaschine;
- Fig. 5: zeitliche Entwicklungen des durch ein Magnetventil fließenden Stroms und der an das Magnetventil angelegten Spannung in einer schematischen Diagrammdarstellung;
- Fig. 6: zeitliche Entwicklungen des durch ein Magnetventil fließenden Stroms und der an dem Magnetventil anliegenden Spannung in einer schematischen Diagrammdarstellung; und
- Fig. 7: ein Vergleich von zeitlichen Entwicklungen der an drei verschiedenen Magnetventilen anliegenden Spannungen, der durch die drei Magnetventile fließenden Ströme und der Ankerposition der Ventilanker der drei Magnetventile in einer schematischen Diagrammdarstellung.

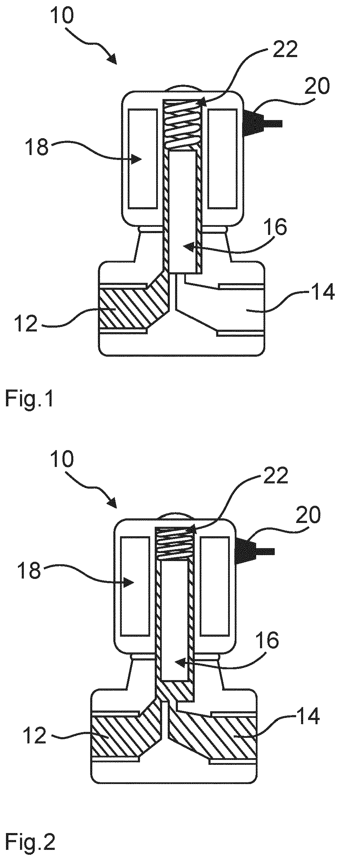

Die Fig. 1 und 2 zeigen ein Magnetventil 10 einer landwirtschaftlichen Ausbringmaschine, beispielsweise einer Feldspritze. Das Magnetventil 10 wird zur Durchflussmengensteuerung eingesetzt, sodass eine beabsichtigte Menge an Spritzflüssigkeit, beispielsweise Pflanzenschutzmittel, auf eine landwirtschaftliche Nutzfläche ausgebracht werden kann.

Das Magnetventil 10 weist einen Ventileinlass 12 und einen Ventilauslass 14 auf. Über den Ventileinlass 12 gelangt die auszubringende Flüssigkeit in das Magnetventil 10. Über den Ventilauslass 14 kann die auszubringende Flüssigkeit aus dem Magnetventil 10 ausgeleitet werden. Die fluidleitende Verbindung zwischen dem Ventileinlass 12 und dem Ventilauslass 14 kann über einen Ventilanker 16 gesperrt und freigegeben werden. Bei dem dargestellten Magnetventil 10 handelt es sich um ein stromlos geschlossenes Ventil, wobei durch eine Bestromung des Magnetventils 10 der Ventilanker 16 angehoben werden kann, um somit den Ventileinlass 12 mit dem Ventilauslass 14 fluidleitend zu verbinden.

Das Magnetventil 10 weist eine Stromversorgung 20 auf, über welche die Spule 18 des Magnetventils 10 bestromt werden kann. Durch eine Bestromung der Spule 18 wird ein Magnetfeld aufgebaut, welches eine Hubbewegung des Ventilankers 16 veranlasst. Der Ventilanker 16 ist mit einer Rückstellfeder 22 gekoppelt, welche eine Schließkraft auf den Ventilanker 16 aufbringt. Über die Rückstellfeder 22 wird der Ventilanker 16 zurück in die Schließstellung bewegt, wenn keine oder keine ausreichende Bestromung der Spule 18 erfolgt.

Die Fig. 1 zeigt das Magnetventil 10 im geschlossenen Zustand, wobei die Fig. 2 das Magnetventil 10 in einem geöffneten Zustand zeigt.

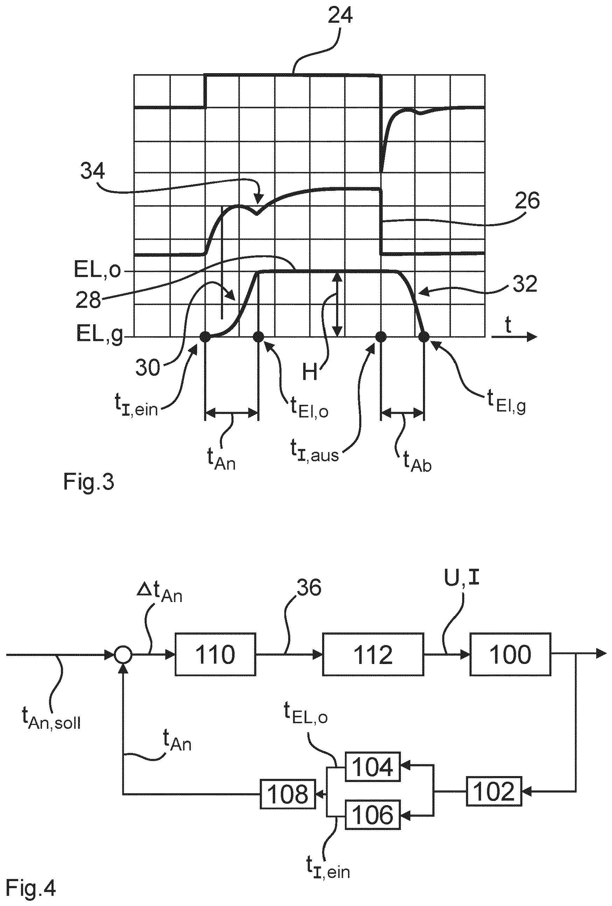

Die Fig. 3 zeigt eine zeitliche Spannungsentwicklung 24, eine zeitliche Stromentwicklung 26 und die Veränderung der Ankerposition 28 eines Ventilankers 16 über die Zeit t.

Zum Öffnen des Magnetventils 10 wird zu einem Bestromungsstartzeitpunkt t_{l,ein} eine Spannung an das Magnetventil 10 angelegt, um eine Stromeinprägung und somit eine Ankerbewegung zu verursachen. Nach dem Bestromungsstartzeitpunkt t_{l,ein} vergeht zunächst eine kurze Ansprechverzugszeit, bevor sich der Ventilanker 16 in Bewegung setzt und eine Öffnungsbewegung 30 ausführt. Das Magnetventil 10 befindet sich in einem vollständig geöffneten Zustand, wenn der Ventilanker 16 eine Endlage EL,o erreicht. Der Ventilanker 16 erreicht die Endlage EL,o zum Endlageeinnahmezeitpunkt t_{EL,o}. Die Zeitdauer zwischen dem Bestromungsstartzeitpunkt t_{l,ein} und dem Endlageeinnahmezeitpunkt t_{EL,o} wird als Anzugszeit t_{An} bezeichnet.

Zum Schließen des Magnetventils 10 wird die Bestromung des Magnetventils 10 zum Bestromungsunterbrechungszeitpunkt t_{l,aus} unterbrochen. Nach einer kurzen Abfallverzugszeit führt der Ventilanker 16 dann eine Schließbewegung 32 aus und erreicht durch die Schließbewegung 32 letztendlich die Endlage EL,g, in welcher sich das Magnetventil 10 in einem vollständig geschlossenen Zustand befindet. Der Ventilanker 16 erreicht die Endlage EL,g zum Endlageeinnahmezeitpunkt t_{EL,g}. Die Zeitdauer zwischen dem Bestromungsunterbrechungszeitpunkt t_{l,aus} und dem Endlageeinnahmezeitpunkt t_{EL,g} wird als Abfallzeit t_{Ab} bezeichnet.

Der Lageunterschied zwischen der Endlage EL,o und der Endlage EL,g entspricht dem Ventilhub H.

In der zeitlichen Entwicklung 26 des durch das Magnetventil 10 fließenden Stroms I ergibt sich eine spezifische Stromstärkenänderung 34, wenn der Ventilanker 16 die Endlage EL,o erreicht. In der Endlage EL,o schlägt der Ventilanker 16 an eine Anschlagsfläche an, welcher eine weitere Bewegung des Ventilankers 16 verhindert. Die spezifische Stromstärkenänderung 34 in der Stromentwicklung 26, welche sich ergibt, wenn der Ventilanker 16 die Endlage EL,o einnimmt, ist ein lokales Extremum, nämlich ein lokales Minimum, im Stromverlauf 26.

Aufgrund von fertigungsbedingten Toleranzen kann die tatsächliche Anzugszeit t_{An} eines Magnetventils 10 von einer Soll-Anzugszeit t_{An,soll} abweichen. Dies führt dazu, dass es zu Abweichungen hinsichtlich der ausgebrachten Menge an Flüssigkeit kommt. Um entsprechende Abweichungen von einer Soll-Ausbringmenge zu verhindern oder zumindest zu reduzieren, kann der Betrieb eines Magnetventils 10 einer landwirtschaftlichen Ausbringmaschine entsprechend der in der Fig. 4 dargestellten Routine geregelt werden.

In der zeitlichen Entwicklung 24 der an dem Magnetventil 10 anliegenden Spannung U ergibt sich eine spezifische Spannungsänderung 38, wenn der Ventilanker 16 die Endlage EL,g erreicht. In der Endlage EL,g erreicht der Ventilanker 16 einen Anschlag, welcher eine weitere Bewegung des Ventilankers 16 verhindert. Die spezifische Spannungsänderung 38 in der Spannungsentwicklung 24, welche sich ergibt, wenn der Ventilanker 16 die Endlage EL,g einnimmt, ist ein lokales Extremum, nämlich ein lokales Minimum, im Spannungsverlauf 24.

Aufgrund von fertigungsbedingten Toleranzen kann auch die tatsächliche Abfallzeit t_{Ab} eines Magnetventils 10 von einer Soll-Abfallzeit abweichen. Dies führt dazu, dass es zu Abweichungen hinsichtlich der ausgebrachten Menge an Flüssigkeit kommt. Um entsprechende Abweichungen von einer Soll-Ausbringmenge zu verhindern oder zumindest zu reduzieren, kann beim Ermitteln einer ventilspezifischen Bestromungsvorgabe 36 auch die ventilspezifische Abfallzeit t_{Ab} berücksichtigt werden.

Die Fig. 4 zeigt ein Verfahren zum Regeln des Betriebs eines zur Durchflussmengensteuerung eingesetzten Magnetventils 10 einer landwirtschaftlichen Ausbringmaschine, wobei das Magnetventil 10 im Verfahrensschritt 100 im Rahmen eines Regelungsvorgangs bestromt wird. Bei der Bestromung des Magnetventils 10 wird eine Spannung U an das Magnetventil 10 angelegt, sodass die Einprägung eines Stroms I in das Magnetventil 10 erfolgt. Durch das Bestromen des Magnetventils 10 wird eine Bewegung des Ventilankers 16 veranlasst.

Im Verfahrensschritt 102 wird die zeitliche Entwicklung 26 des während des Regelungsvorgangs durch das Magnetventil 10 fließenden Stroms I ermittelt. Das Ermitteln der zeitlichen Entwicklung 26 des während des Regelungsvorgangs durch das Magnetventil 10 fließenden Stroms I erfolgt vorzugsweise durch eine Steuerungseinrichtung der Ausbringmaschine. Die Steuerungseinrichtung kann die zeitliche Entwicklung 26 des durch das Magnetventil 10 fließenden Stroms I über eine Stromabtastung ermitteln.

Im Schritt 104 wird die ermittelte zeitliche Entwicklung 26 des während des Regelungsvorgangs durch das Magnetventil 10 fließenden Stroms I zum Erfassen eines Endlageeinnahmezeitpunkts t_{EL,o} ausgewertet. Zum Endlageeinnahmezeitpunkt t_{EL,o} nimmt der Ventilanker 16 während des Regelungsvorgangs nach einer durch die Bestromung verursachten Bewegung eine Endlage EL,o ein, sodass sich das Magnetventil 10 in einem vollständig geöffneten Zustand befindet. Das Auswerten der ermittelten zeitlichen Entwicklung 26 des während des Regelungsvorgangs durch das Magnetventil 10 fließenden Stroms I umfasst dabei das Identifizieren einer spezifischen Stromstärkenänderung 34 in der zeitlichen Entwicklung 26 des während des Regelungsvorgangs durch das Magnetventil 10 fließenden Stroms I. Die spezifische Stromstärkenänderung 34, aus welcher abgeleitet werden kann, dass der Ventilanker 16 die Endlage EL,o eingenommen hat, kann ein Wendepunkt im Stromverlauf oder ein lokales Extremum im Stromverlauf sein. Das Auswerten der ermittelten zeitlichen Entwicklung kann ebenfalls durch die Steuerungseinrichtung der Ausbringmaschine erfolgen.

Im Schritt 106 erfolgt ein Ermitteln eines Bestromungsstartzeitpunkts t_{l,ein}, zu welchem die Bestromung des Magnetventils 10 während des Regelungsvorgangs zum Veranlassen der Bewegung des Ventilankers 16 gestartet wurde. Der Zeitpunkt des Einschaltens der Spannung U wird von der Steuerungseinrichtung vorgegeben und ist dieser somit bekannt.

Im Schritt 108 wird eine ventilspezifische Anzugszeit t_{An} des Ventilankers 16 auf Grundlage des ermittelten Bestromungsstartzeitpunkts t_{l,ein} und des ermittelten Endlageeinnahmezeitpunkts t_{EL,o} ermittelt. Die Anzugszeit t_{An} betrifft die Zeitdauer zwischen dem Bestromungsstartzeitpunkt t_{l,ein} und dem Endlageeinnahmezeitpunkt t_{EL,o}.

Die ermittelte ventilspezifische Anzugszeit t_{An} wird anschließend mit einer Soll-Anzugszeit t_{An,soll} verglichen, sodass sich eine Anzugszeitdifferenz Δt_{An} ergibt.

Im Schritt 110 wird auf Grundlage der Anzugszeitdifferenz Δt_{An} dann eine ventilspezifische Bestromungsvorgabe 36 für den geregelten Betrieb des Magnetventils 10 ermittelt. Die Ermittlung der Bestromungsvorgabe erfolgt vorzugsweise durch die Steuerungseinrichtung der Ausbringmaschine. Das Ermitteln der ventilspezifischen Bestromungsvorgabe erfolgt also unter Berücksichtigung der ermittelten zeitlichen Entwicklung 26 des während des Regelungsvorgangs durch das Magnetventil 10 fließenden Stroms I. Ferner werden beim Ermitteln der ventilspezifischen Bestromungsvorgabe 36 für den geregelten Betrieb des Magnetventils 10 der Endlageeinnahmezeitpunkt t_{EL,o}, der Bestromungsstartzeitpunkt t_{l,ein}, die ventilspezifische Anzugszeit t_{An} und die Soll-Anzugszeit t_{An,soll} berücksichtigt.

Im Schritt 112 wird das Spannungssignal zum Bestromen des Magnetventils 10 unter Einhaltung der ermittelten ventilspezifischen Bestromungsvorgabe 36 erzeugt. Das unter Berücksichtigung der Bestromungsvorgabe erzeugte Spannungssignal kann beispielsweise ein hochfrequentes pulsweitenmoduliertes Signal sein. Das Ermitteln der ventilspezifischen Bestromungsvorgabe 36 für den geregelten Betrieb des Magnetventils 10 kann also auch das Ermitteln eines ventilspezifischen Modulationsmusters umfassen. Durch die Einhaltung der Bestromungsvorgabe 36 in dem geregelten Betrieb des Magnetventils 10 wird die auf die ventilspezifische Anzugszeit t_{An} zurückgehende Abweichung der Durchflussmenge in Bezug auf eine sich bei der Soll-Anzugszeit t_{An,soll} ergebende Soll-Durchflussmenge ausgeglichen. Die Bestromungsvorgabe 36 kann zu einer Änderung der Bestromungsstartzeitpunkte oder zu einer Änderung der Stromeinprägung während der Anzugszeit t_{An} führen. Beispielsweise kann eine stärkere oder schwächere Stromeinprägung erfolgen, um die Ankerbewegung des Ventilankers 16 zu verzögern oder zu beschleunigen.

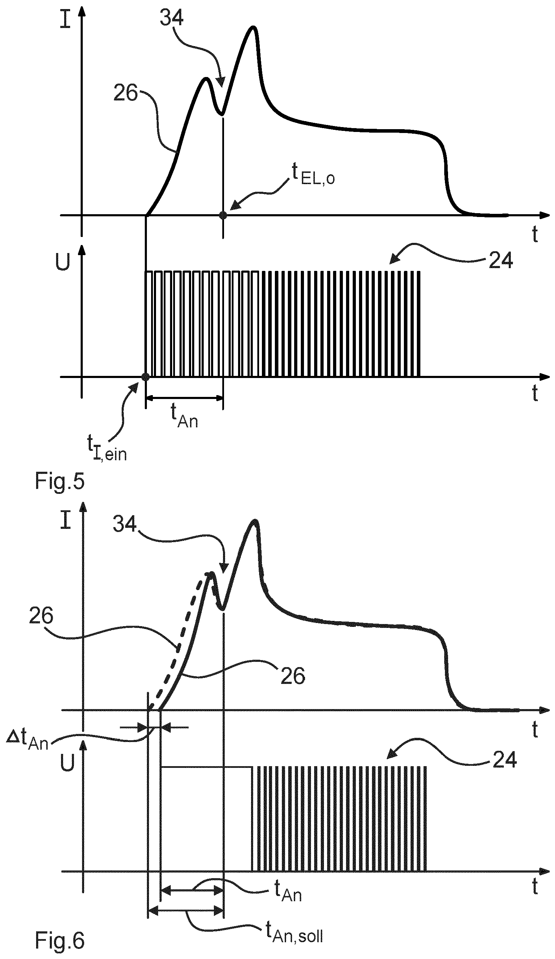

Die Fig. 5 zeigt ein pulsweitenmoduliertes Spannungssignal 24, welches an einem Magnetventil 10 anliegt. In das Magnetventil 10 wird ein Strom I eingeprägt, wobei ebenfalls der Stromverlauf 26 über die Zeit t dargestellt ist. Durch eine Auswertung des Stromverlaufs 26 kann eine spezifische Stromstärkenänderung 34 im Stromverlauf 26 identifiziert werden, wobei die spezifische Stromstärkenänderung 34 dadurch veranlasst wird, dass der Ventilanker 16 des Magnetventils 10 eine Endlage EL,o einnimmt, in welcher das Magnetventil 10 vollständig geöffnet ist. Die Steuerungseinrichtung der landwirtschaftlichen Ausbringmaschine kann auf Grundlage des Bestromungsstartzeitpunkts t_{l,ein} und des Endlageeinnahmezeitpunkts t_{EL,o} die ventilspezifische Anzugszeit t_{An} ermitteln.

Die Fig. 6 zeigt die Stromentwicklung 26' an einem Referenzventil, wobei das Referenzventil eine Soll-Anzugszeit t_{An,soll} vorgibt. Zwischen der Anzugszeit t_{An} und der Soll-Anzugszeit t_{An,soll} besteht eine Anzugszeitdifferenz Δt_{An}. Durch eine geeignete Bestromungsvorgabe 36 kann die Anzugszeitdifferenz Δt_{An} ausgeglichen werden. Eine von einem Sollwert abweichende Anzugszeit t_{An} eines Magnetventils 10 kann dadurch kompensiert werden, dass eine stärkere oder schwächere Stromeinprägung während der Anzugszeit t_{An} umgesetzt wird und somit die Anzugszeit t_{An} verkürzt oder verlängert wird. Die Soll-Anzugszeit t_{An,soll} kann bei sämtlichen oder mehreren Magnetventilen an einem Spritzgestänge einer landwirtschaftlichen Ausbringmaschine identisch sein. Ferner kann sich die Soll-Anzugszeit t_{An,soll} einzelner Magnetventile voneinander unterscheiden. Die Soll-Anzugszeit t_{An,soll} eines Magnetventils 10 kann abhängig von dessen Anordnung im Spritzgestänge und somit dem am Magnetventil 10 anliegenden Fluiddruck bzw. von der Abweichung des anliegenden Fluiddrucks von einem Soll-Druck sein. Der an dem Magnetventilen 10 eines Spritzgestänges anliegende Fluiddruck nimmt üblicherweise von der Gestängemitte aus nach außen hin ab. Um eine homogene Flüssigkeitsausbringung über die gesamte Breite des Spritzgestänges zu erreichen, können voneinander abweichende ventilspezifische Soll-Anzugszeiten t_{An,soll} für die Magnetventile vorgegeben werden. Die ventilspezifischen Soll-Anzugszeiten t_{An,soll} können von der Gestängemitte aus nach außen hin abnehmen, sodass die Zeitspanne, in welcher die jeweiligen Magnetventile 10 geöffnet sind, von der Gestängemitte aus nach außen hin zunimmt und somit der Einfluss des Fluiddruckabfalls von der Gestängemitte aus nach außen hin ausgeglichen wird. Vorzugsweise wird der Fluiddruck an einer oder mehreren Stellen am Spritzgestänge ermittelt. Der Abfall des Fluiddrucks, welcher zur Berechnung der ventilspezifischen Soll-Anzugszeiten t_{An,soll} herangezogen wird, kann dann über ein Druckabfallmodell durch die Steuerungseinrichtung berechnet und berücksichtigt werden.

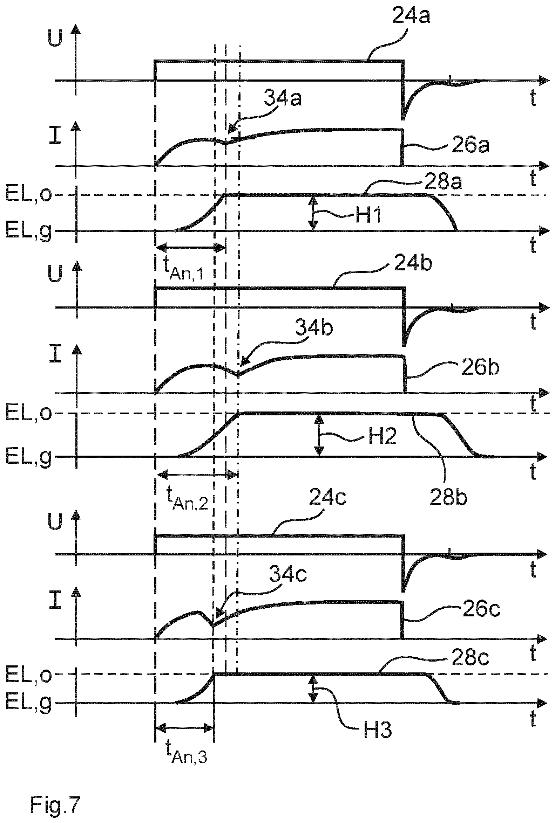

Die Fig. 7 zeigt Spannungsentwicklungen 24a-24c, Stromentwicklungen 26a-26c und Ankerpositionen 28a-28c von drei Magnetventilen 10 eines Spritzgestänges. Die Verläufe 24a, 26a, 28a beziehen sich auf ein erstes Magnetventil 10. Die Verläufe 24b, 26b, 28b beziehen sich auf ein zweites Magnetventil 10. Die Verläufe 24c, 26c, 28c beziehen sich auf ein drittes Magnetventil 10.

Die Magnetventile 10 weisen aufgrund von Fertigungstoleranzen unterschiedliche Ventilhübe H₁-H₃ auf. Aufgrund der unterschiedlichen Ventilhübe H₁-H₃ müssen die Ventilanker 16 der jeweiligen Magnetventile 10 entlang von unterschiedlich langen Öffnungspfaden beim Öffnen und Schließen der Magnetventile 10 bewegt werden. Aufgrund der unterschiedlich langen Öffnungspfade ergeben sich unterschiedliche Anzugszeiten t_{An,1}-t_{An,3} an den Magnetventilen 10. Die ventilspezifischen Anzugszeiten t_{An,1}-t_{An,3} können über eine Erfassung der spezifischen Stromstärkenänderungen 34a-34c in den Stromverläufen 26a-26c ermittelt werden. Zum Ausgleich der unterschiedlichen Anzugszeiten t_{An,1}-t_{An,3} an den Magnetventilen 10 können im Rahmen des Regelungsvorgangs für den Betrieb der Magnetventile 10 ventilspezifische Bestromungsvorgaben 36 ermittelt werden, über welche die unterschiedlichen Anzugszeiten t_{An,1-}t_{An,3} kompensiert werden.

Ferner können die ventilspezifischen Abfallzeiten über eine Erfassung von spezifischen Spannungsänderungen 38a-38c in den Spannungsverläufen 24a-24c ermittelt werden. Zum Ausgleich der unterschiedlichen Abfallzeiten an den Magnetventilen 10 können im Rahmen des Regelungsvorgangs für den Betrieb der Magnetventile 10 ventilspezifische Bestromungsvorgaben 36 ermittelt werden, über welche die unterschiedlichen Abfallzeiten kompensiert werden.

In der Fig. 7 sind voneinander abweichende und auf Fertigungstoleranzen zurückgehende Ventilhübe beispielhaft als Ursache für unterschiedliche Anzugszeiten t_{An,1}-t_{An,3} angegeben. Die unterschiedlichen Anzugszeiten t_{An,1}-t_{An,3} können sich jedoch auch durch Induktivitäts- und/oder Widerstandsunterschiede der Spulen 18 der Magnetventile 10 ergeben. Ferner kann sich die Reibung der jeweiligen Ventilanker 16 der Magnetventile 10 voneinander unterscheiden. Der Einfluss dieser fertigungsbedingten Toleranzen auf das Verhalten und den Betrieb der Magnetventile 10 kann ebenfalls durch ventilspezifische Bestromungsvorgaben 36 ausgeglichen bzw. kompensiert werden.

### Bezugszeichenliste

- 10: Magnetventil
- 12: Ventileinlass
- 14: Ventilauslass
- 16: Ventilanker
- 18: Spule
- 20: Stromversorgung
- 22: Rückstellfeder
- 24, 24a-24c: Spannungsentwicklungen
- 26, 26', 26a-26c: Stromentwicklungen
- 28, 28a-28c: Ankerpositionen
- 30: Ankerbewegungen
- 32: Ankerbewegungen
- 34, 34a-34c: spezifische Stromstärkenänderung
- 36: Bestromungsvorgabe
- 38, 38a-38c: spezifische Spannungsänderung

- 100-112: Verfahrensschritte

- I: Strom
- U: Spannung
- t: Zeit
- t_{An}, t_{An,1}, t_{An,2}, t_{An,3}: Anzugszeiten
- t_{An,Soll}: Soll-Anzugszeit
- Δt_{An}: Anzugszeitdifferenz
- t_{Ab}: Abfallzeit
- t_{EL,o}: Endlageeinnahmezeitpunkt
- t_{EL,g}: Endlageeinnahmezeitpunkt
- t_{l,ein}: Bestromungsstartzeitpunkt
- t_{l,aus}: Bestromungsunterbrechungszeitpunkt
- H, H₁-H₃: Ventilhübe
- EL,o: Endlage
- EL,g: Endlage

## Patentansprüche

1. Verfahren zum Regeln des Betriebs eines derart zur Durchflussmengensteuerung eingesetzten Magnetventils (10) einer landwirtschaftlichen Ausbringmaschine, dass eine beabsichtigte Menge an Spritzflüssigkeit, beispielsweise Pflanzenschutzmittel, auf eine landwirtschaftliche Nutzfläche ausgebracht werden kann, wobei
das Magnetventil (10) einen durch Bestromung des Magnetventils (10) bewegbaren Ventilanker (16) aufweist, mit dem Schritt:
- Bestromen des Magnetventils (10) im Rahmen eines Regelungsvorgangs, wobei durch das Bestromen des Magnetventils (10) eine Bewegung des Ventilankers (16) veranlasst wird;
**gekennzeichnet durch** die Schritte:
- Ermitteln der zeitlichen Entwicklung (26, 26', 26a-26c) des während des Regelungsvorgangs durch das Magnetventil (10) fließenden Stroms (I); und
- Ermitteln einer ventilspezifischen Bestromungsvorgabe (36) für den geregelten Betrieb des Magnetventils (10) unter Berücksichtigung der ermittelten zeitlichen Entwicklung (26, 26', 26a-26c) des während des Regelungsvorgangs durch das Magnetventil (10) fließenden Stroms (I).

2. Verfahren nach Anspruch 1,
**gekennzeichnet durch** den Schritt:
- Bestromen des Magnetventils (10) in dem geregelten Betrieb des Magnetventils (10) unter Einhaltung der ermittelten ventilspezifischen Bestromungsvorgabe (36).

3. Verfahren nach Anspruch 1 oder 2,
**gekennzeichnet durch** den Schritt:
- Auswerten der ermittelten zeitlichen Entwicklung (26, 26', 26a-26c) des während des Regelungsvorgangs durch das Magnetventil (10) fließenden Stroms (I) zum Erfassen eines Endlageeinnahmezeitpunkts (t_{EL,1}), zu welchem der Ventilanker (16) während des Regelungsvorgangs nach einer durch die Bestromung verursachten Bewegung eine Endlage (EL,o) einnimmt,
wobei beim Ermitteln der ventilspezifischen Bestromungsvorgabe (36) für den geregelten Betrieb des Magnetventils (10) der erfasste Endlageeinnahmezeitpunkt (t_{EL,o}) berücksichtigt wird.

4. Verfahren nach Anspruch 3,
**dadurch gekennzeichnet, dass** das Auswerten der ermittelten zeitlichen Entwicklung (26, 26', 26a-26c) des während des Regelungsvorgangs durch das Magnetventil (10) fließenden Stroms (I) das Identifizieren einer spezifischen Stromstärkenänderung (34, 34a-34c) in der zeitlichen Entwicklung (26, 26', 26a-26c) des während des Regelungsvorgangs durch das Magnetventil (10) fließenden Stroms (I) umfasst.

5. Verfahren nach einem der vorstehenden Ansprüche,
**gekennzeichnet durch** den folgenden Schritt:
- Ermitteln eines Bestromungsstartzeitpunkts (t_{l,ein}), zu welchem die Bestromung des Magnetventils (10) während des Regelungsvorgangs zum Veranlassen der Bewegung des Ventilankers (16) gestartet wird;
wobei beim Ermitteln der ventilspezifischen Bestromungsvorgabe (36) für den geregelten Betrieb des Magnetventils (10) der ermittelte Bestromungsstartzeitpunkt (t_{l,ein}) berücksichtigt wird.

6. Verfahren nach Anspruch 5,
**gekennzeichnet durch** den Schritt:
- Ermitteln einer ventilspezifischen Anzugszeit (t_{An}, t_{An,1}, t_{An,2}, t_{An,3}) des Ventilankers (16) auf Grundlage des ermittelten Bestromungsstartzeitpunkts (t_{l,ein}) und des ermittelten Endlageeinnahmezeitpunkts (t_{EL,o}), wobei die Anzugszeit (t_{An}, t_{An,1}, t_{An,2}, t_{An,3}) die Zeitdauer zwischen dem Bestromungsstartzeitpunkt (t_{l,ein}) und dem Endlageeinnahmezeitpunkt (t_{EL,o}) betrifft;
wobei beim Ermitteln der ventilspezifischen Bestromungsvorgabe (36) für den geregelten Betrieb des Magnetventils (10) die ermittelte ventilspezifische Anzugszeit (t_{An}, t_{An,1}, t_{An,2}, t_{An,3}) des Ventilankers (16) berücksichtigt wird.

7. Verfahren nach Anspruch 6,
**dadurch gekennzeichnet, dass** durch die Einhaltung der Bestromungsvorgabe (36) in dem geregelten Betrieb des Magnetventils (10) die auf die ventilspezifische Anzugszeit (t_{An}, t_{An,1}, t_{An,2}, t_{An,3}) zurückgehende Abweichung der Durchflussmenge in Bezug auf eine sich bei einer Soll-Anzugszeit (t_{An,Soll}) ergebende Soll-Durchflussmenge ausgeglichen wird.

8. Verfahren nach einem der vorstehenden Ansprüche,
**gekennzeichnet durch** den folgenden Schritt:
- Ermitteln eines Bestromungsunterbrechungszeitpunkts (t_{l,aus}), zu welchem die Bestromung des Magnetventils (10) während des Regelungsvorgangs zum Veranlassen einer Bewegung des Ventilankers (16) unterbrochen wird;
wobei beim Ermitteln der ventilspezifischen Bestromungsvorgabe (36) für den geregelten Betrieb des Magnetventils (10) der ermittelte Bestromungsunterbrechungszeitpunkt (t_{l,aus}) berücksichtigt wird.

9. Verfahren nach Anspruch 8,
**gekennzeichnet durch** den Schritt:
- Ermitteln einer ventilspezifischen Abfallzeit (t_{Ab}) des Ventilankers (16) auf Grundlage des ermittelten Bestromungsunterbrechungszeitpunkts (t_{l,aus}) und eines ermittelten Endlageeinnahmezeitpunkts (t_{EL},_{g}), wobei die Abfallzeit (t_{Ab}) die Zeitdauer zwischen dem Bestromungsunterbrechungszeitpunkt (t_{l,aus}) und dem Endlageeinnahmezeitpunkt (t_{EL,g}) betrifft;
wobei beim Ermitteln der ventilspezifischen Bestromungsvorgabe (36) für den geregelten Betrieb des Magnetventils (10) die ermittelte ventilspezifische Abfallzeit (t_{Ab}) des Ventilankers (16) berücksichtigt wird.

10. Verfahren nach Anspruch 9,
**dadurch gekennzeichnet, dass** durch die Einhaltung der Bestromungsvorgabe (36) in dem geregelten Betrieb des Magnetventils (10) die auf die ventilspezifische Abfallzeit (t_{Ab}) zurückgehende Abweichung der Durchflussmenge in Bezug auf eine sich bei einer Soll-Abfallzeit ergebende Soll-Durchflussmenge ausgeglichen wird.

11. Verfahren nach einem der vorstehenden Ansprüche,
**dadurch gekennzeichnet, dass** die während des Regelungsvorgangs an das Magnetventil (10) angelegte Spannung pulsweitenmoduliert ist und das Ermitteln einer ventilspezifischen Bestromungsvorgabe (36) für den geregelten Betrieb des Magnetventils (10) das Ermitteln eines ventilspezifischen Modulationsmusters umfasst.

12. Verfahren nach Anspruch 11,
**dadurch gekennzeichnet, dass** beim Ermitteln des ventilspezifischen Modulationsmusters
- die Bestromungsstartzeitpunkte (t_{l,ein}) für den geregelten Betrieb des Magnetventils (10) unter Berücksichtigung der ventilspezifischen Anzugszeit (t_{An}, t_{An,1}, t_{An,2}, t_{An,3}) des Ventilankers (16) festgelegt werden; und/oder
- die Bestromungsunterbrechungszeitpunkte (t_{l,aus}) für den geregelten Betrieb des Magnetventils (10) unter Berücksichtigung der ventilspezifischen Abfallzeit (t_{Ab}) des Ventilankers (16) festgelegt werden.

13. Verfahren zum Betreiben von mehreren zur Durchflussmengensteuerung eingesetzten Magnetventilen (10) einer landwirtschaftlichen Ausbringmaschine, wobei die Magnetventile (10) jeweils einen durch Bestromung des Magnetventils (10) bewegbaren Ventilanker (16) aufweisen, mit den Schritten:
- Regeln des Betriebs der mehreren Magnetventile (10); und
- Steuern der Durchflussmenge während des geregelten Betriebs der Magnetventile (10) beim Ausbringen von Flüssigkeit auf eine landwirtschaftliche Nutzfläche;
**dadurch gekennzeichnet, dass** der Betrieb der Magnetventile (10) mittels eines Verfahrens nach einem der vorstehenden Ansprüche geregelt wird.

14. Verfahren nach Anspruch 13,
**dadurch gekennzeichnet, dass** die ventilspezifischen Bestromungsvorgaben (36) für den geregelten Betrieb der Magnetventile (10) derart ermittelt werden, dass
- die Einflüsse der voneinander abweichenden ventilspezifischen Anzugszeiten (t_{An}, t_{An,1}, t_{An,2}, t_{An,3}) der jeweiligen Magnetventile (10) auf die Durchflussmenge ausgeglichen werden; und/oder
- die Endlageeinnahmezeitpunkte (t_{EL,o}, t_{EL,o}), zu welchen die Ventilanker (16) der jeweiligen Magnetventile (10) eine Endlage (EL,o, EL,g) einnehmen, aufeinander abgestimmt werden.

15. Landwirtschaftliche Ausbringmaschine, mit
- mehreren zur Durchflussmengensteuerung eingesetzten Magnetventilen (10) (10), und
- einer Steuerungseinrichtung, mittels welcher der Betrieb der Magnetventile (10) regelbar ist;
**dadurch gekennzeichnet, dass** die Steuerungseinrichtung dazu eingerichtet ist, ein Regeln des Betriebs der Magnetventile (10) gemäß einem der Ansprüche 1 bis 12 und/oder einen Betrieb der Magnetventile (10) gemäß Anspruch 13 oder 14 zu veranlassen.

## Claims

1. Method for controlling the operation of a solenoid valve (10) of an agricultural spreading machine, which valve is used for flow rate control, such that an intended quantity of spray liquid, for example plant protectant, can be applied to an agricultural area, wherein
the solenoid valve (10) has a valve armature (16) that can be moved by energizing the solenoid valve (10), comprising the step of:
- Energizing the solenoid valve (10) as part of a control process, wherein energizing the solenoid valve (10) initiates a movement of the valve armature (16);
**characterized by** the steps of:
- Determining the time development (26, 26', 26a-26c) of the current (I) flowing through the solenoid valve (10) during the control process; and
- Determining a valve-specific energization requirement (36) for the controlled operation of the solenoid valve (10) taking into account the determined time development (26, 26', 26a-26c) of the current (I) flowing through the solenoid valve (10) during the control process.

2. Method according to claim 1,
**characterized by** the step of:
- Energizing the solenoid valve (10) in the controlled operation of the solenoid valve (10) while adhering to the determined valve-specific energization requirement (36).

3. Method according to claim 1 or 2,
**characterized by** the step of:
- Evaluating the determined time development (26, 26', 26a-26c) of the current (I) flowing through the solenoid valve (10) during the control process to record an end position attainment time (t_{EL,o}), at which the valve armature (16) attains an end position (EL,o) during the control process after a movement caused by the energization,
wherein when determining the valve-specific energization requirement (36) for the controlled operation of the solenoid valve (10) the detected end position attainment time (t_{EL,o}) is taken into account.

4. Method according to claim 3,
**characterized in that** evaluating the determined time development (26, 26', 26a-26c) of the current (I) flowing through the solenoid valve (10) during the control process includes identifying a specific change in current intensity (34, 34a-34c) in the time development (26, 26', 26a-26c) of the current (I) flowing through the solenoid valve (10) during the control process.

5. Method according to any of the preceding claims,
**characterized by** the following step:
- Determining an energization start time (t_{I,ein}), at which the energization of the solenoid valve (10) is started during the control process to initiate the movement of the valve armature (16);
wherein when determining the valve-specific energization requirement (36) for the controlled operation of the solenoid valve (10) the determined energization start time (t_{I,ein}) is taken into account.

6. Method according to claim 5,
**characterized by** the step of:
- Determining a valve-specific pick-up time (t_{An}, t_{An,1}, t_{An,2}, t_{An,3}) of the valve armature (16) based on the determined energization start time (t_{I, ein}) and the determined end position attainment time (t_{EL,o}), wherein the pick-up time (t_{An}, t_{An,1}, t_{An,2}, t_{An,3}) relates to the time period between the energization start time (t_{I,ein}) and the end position attainment time (t_{EL,o});
wherein when determining the valve-specific energization requirement (36) for the controlled operation of the solenoid valve (10) the determined valve-specific pick-up time (t_{An}, t_{An,1}, t_{An,2}, t_{An,3}) of the valve armature (16) is taken into account.

7. Method according to claim 6,
**characterized in that** by complying with the energization requirement (36) in the controlled operation of the solenoid valve (10) the deviation of the flow rate, which is traced back to the valve-specific pick-up time (t_{An}, t_{An,1}, t_{An,2}, t_{An,3}), in relation to a target flow rate resulting from a target pick-up time (t_{An,Soll}), is compensated for.

8. Method according to any of the preceding claims,
**characterized by** the following step:
- Determining an energization interruption time (t_{I,aus}), at which the energization of the solenoid valve (10) is interrupted during the control process to initiate a movement of the valve armature (16);
wherein when determining the valve-specific energization requirement (36) for the controlled operation of the solenoid valve (10) the determined energization interruption time (t_{I,aus}) is taken into account.

9. Method according to claim 8,
**characterized by** the step of:
- Determining a valve-specific drop-out time (t_{Ab}) of the valve armature (16) based on the determined energization interruption time (t_{I,aus}) and a determined end position attainment time (t_{EL,g}), wherein the drop-out time (t_{Ab}) relates to the time period between the energization interruption time (t_{I,aus}) and the end position attainment time (t_{EL,g});
wherein when determining the valve-specific energization requirement (36) for the controlled operation of the solenoid valve (10) the determined valve-specific drop-out time (t_{Ab}) of the valve armature (16) is taken into account.

10. Method according to claim 9,
**characterized in that** by complying with the energization requirement (36) in the controlled operation of the solenoid valve (10) the deviation of the flow rate, which is traced back to the valve-specific drop-out time (t_{Ab}), in relation to a target flow rate resulting at a target drop-out time, is compensated for.

11. Method according to any of the preceding claims,
**characterized in that** the voltage applied to the solenoid valve (10) during the control process is pulse-width-modulated and determining a valve-specific energization requirement (36) for the controlled operation of the solenoid valve (10) includes determining a valve-specific modulation pattern.

12. Method according to claim 11,
**characterized in that** when determining the valve-specific modulation pattern
- the energization start times (t_{I,ein}) for the controlled operation of the solenoid valve (10) taking into account the valve-specific pick-up time (t_{An}, t_{An,1}, t_{An,2}, t_{An,3}) of the valve armature (16) are specified; and/or
- the energization interruption times (t_{I,aus}) for the controlled operation of the solenoid valve (10) taking into account the valve-specific drop-out time (t_{Ab}) of the valve armature (16) are specified.

13. Method for operating a plurality of solenoid valves (10) of an agricultural spreading machine, which valves are used for flow rate control, wherein the solenoid valves (10) each have a valve armature (16) which can be moved by energizing the solenoid valve (10), comprising the steps of:
- Controlling the operation of the plurality of solenoid valves (10); and
- Controlling the flow rate during the operation of the solenoid valves (10) when applying liquid to an agricultural area;
**characterized in that** the operation of the solenoid valves (10) is controlled by means of a method according to any of the preceding claims.

14. Method according to claim 13,
**characterized in that** the valve-specific energization requirements (36) for the controlled operation of the solenoid valves (10) are determined in such a way that
- the influences of the differing valve-specific pick-up times (t_{An}, t_{An,1}, t_{An,2}, t_{An,3}) of the respective solenoid valves (10) are compensated for on the basis of the flow rate; and/or
- the end position attainment times (t_{EL,o}, t_{EL,o}), at which the valve armatures (16) of the respective solenoid valves (10) attain an end position (EL,o, EL,g), are aligned with each other.

15. Agricultural spreading machine, comprising
- a plurality of solenoid valves (10) (10) used for flow rate control, and
- a control device, by means of which the operation of the solenoid valves (10) can be controlled;
**characterized in that** the control device is configured to initiate the control of the operation of the solenoid valves (10) according to any of claims 1 to 12 and/or to initiate the operation of the solenoid valves (10) according to claim 13 or 14.

## Revendications

1. Procédé pour la régulation du fonctionnement d'une électrovanne (10), utilisée pour la commande du débit, d'une machine d'épandage agricole, de sorte qu'une quantité souhaitée de liquide de pulvérisation, par exemple d'un produit phytosanitaire, peut être épandue sur une surface agricole utile, dans lequel
l'électrovanne (10) présente une armature d'électrovanne (16) pouvant être déplacée par l'alimentation en courant de l'électrovanne (10), comportant l'étape consistant à :
- alimenter en courant l'électrovanne (10) dans le cadre d'un processus de régulation, dans lequel un mouvement de l'armature d'électrovanne (16) est provoqué par l'alimentation en courant de l'électrovanne (10) ;
**caractérisé par** les étapes consistant à :
- déterminer l'évolution dans le temps (26, 26', 26a-26c) du courant (I) circulant à travers l'électrovanne (10) pendant le processus de régulation ; et
- déterminer une consigne d'alimentation en courant (36) spécifique à l'électrovanne pour le fonctionnement régulé de l'électrovanne (10) en tenant compte de l'évolution dans le temps (26, 26', 26a-26c) déterminée du courant (I) circulant à travers l'électrovanne (10) pendant le processus de régulation.

2. Procédé selon la revendication 1,
**caractérisé par** l'étape consistant à :
- alimenter en courant l'électrovanne (10) dans le mode de fonctionnement régulé de l'électrovanne (10) en respectant la consigne d'alimentation en courant (36) spécifique à l'électrovanne déterminée.

3. Procédé selon la revendication 1 ou 2,
**caractérisé par** l'étape consistant à :
- analyser l'évolution dans le temps (26, 26', 26a-26c) déterminée du courant (I) circulant à travers l'électrovanne (10) pendant le processus de régulation, afin de détecter un instant d'occupation de position finale (t_{EL,o}), auquel, pendant le processus de régulation, l'armature d'électrovanne (16) occupe une position finale (EL,o) à la suite d'un mouvement provoqué par l'alimentation en courant,
dans lequel, lors de la détermination de la consigne d'alimentation en courant (36) spécifique à l'électrovanne, l'instant d'occupation de position finale (t_{EL,o}) détecté est pris en compte pour le fonctionnement régulé de l'électrovanne (10).

4. Procédé selon la revendication 3,
**caractérisé en ce que** l'analyse de l'évolution dans le temps (26, 26', 26a-26c) déterminée du courant (I) circulant à travers l'électrovanne (10) pendant le processus de régulation comprend l'identification d'une variation d'intensité de courant (34, 34a-34c) spécifique dans l'évolution dans le temps (26, 26', 26a-26c) du courant (I) circulant à travers l'électrovanne (10) pendant le processus de régulation.

5. Procédé selon l'une des revendications précédentes,
**caractérisé par** l'étape suivante :
- détermination d'un instant de début d'alimentation en courant (t_{I,ein}) auquel l'alimentation en courant de l'électrovanne (10) débute pendant le processus de régulation afin de provoquer le déplacement de l'armature d'électrovanne (16) ;
dans lequel, lors de la détermination de la consigne d'alimentation en courant (36) spécifique à l'électrovanne pour le fonctionnement régulé de l'électrovanne (10), l'instant de début d'alimentation en courant (t_{I,ein}) déterminé est pris en compte.

6. Procédé selon la revendication 5,
**caractérisé par** l'étape consistant à :
- déterminer un temps d'armement (t_{An}, t_{An,1}, t_{An,2}, t_{An,3}) spécifique à l'électrovanne de l'armature d'électrovanne (16) sur la base de l'instant de début d'alimentation en courant (t_{I,ein}) déterminé et de l'instant d'occupation de position finale (t_{EL,o}) déterminé, dans lequel le temps d'armement (t_{An}, t_{An,1}, t_{An,2}, t_{An,3}) correspond à la durée entre l'instant de début d'alimentation en courant (t_{I,ein}) et l'instant d'atteinte de position finale (t_{EL,o}) ;
dans lequel, lors de la détermination de la consigne d'alimentation en courant (36) spécifique à l'électrovanne pour le fonctionnement régulé de l'électrovanne (10), le temps d'armement (t_{An}, t_{An,1}, t_{An,2}, t_{An,3}) spécifique à l'électrovanne de l'armature d'électrovanne (16) est pris en compte.

7. Procédé selon la revendication 6,
**caractérisé en ce que**, grâce au respect de la consigne d'alimentation en courant (36) lors du fonctionnement régulé de l'électrovanne (10), l'écart du débit par rapport à un débit de consigne résultant d'un temps d'armement de consigne (t_{An,Soll}) est compensé, lequel écart diminue en fonction du temps d'armement (t_{An}, t_{An,1}, t_{An,2}, t_{An,3}) spécifique à l'électrovanne.

8. Procédé selon l'une des revendications précédentes,
**caractérisé par** l'étape suivante :
- détermination d'un instant d'interruption d'alimentation en courant (t_{I,aus}) auquel l'alimentation en courant de l'électrovanne (10) est interrompue pendant le processus de régulation afin de provoquer un mouvement de l'armature d'électrovanne (16) ;
dans lequel, lors de la détermination de la consigne d'alimentation en courant (36) spécifique à l'électrovanne pour le fonctionnement régulé de l'électrovanne (10), l'instant d'interruption d'alimentation en courant (t_{I,aus}) déterminé est pris en compte.

9. Procédé selon la revendication 8,
**caractérisé par** l'étape consistant à :
- déterminer un temps de descente (t_{Ab}) spécifique à l'électrovanne de l'armature d'électrovanne (16) sur la base de l'instant d'interruption d'alimentation en courant (t_{I,aus}) déterminé et d'un instant d'occupation de position finale (t_{EL,g}) déterminé, dans lequel le temps de descente (t_{Ab}) correspond à la durée entre l'instant d'interruption d'alimentation en courant (t_{I,aus}) et l'instant d'occupation de position finale (t_{EL,g}) ;
dans lequel, lors de la détermination de la consigne d'alimentation en courant (36) spécifique à l'électrovanne pour le fonctionnement régulé de l'électrovanne (10), le temps de descente (t_{Ab}) spécifique à l'électrovanne déterminé de l'armature d'électrovanne (16) est pris en compte.

10. Procédé selon la revendication 9,
**caractérisé en ce que**, grâce au respect de la consigne d'alimentation en courant (36) lors du fonctionnement régulé de l'électrovanne (10), l'écart du débit par rapport à un débit de consigne résultant d'un temps de descente de consigne est compensé, lequel écart diminue en fonction du temps de descente (t_{Ab}) spécifique à l'électrovanne.

11. Procédé selon l'une des revendications précédentes,
**caractérisé en ce que** la tension appliquée à l'électrovanne (10) pendant le processus de régulation est modulée en largeur d'impulsion et la détermination d'une consigne d'alimentation en courant (36) spécifique à l'électrovanne pour le fonctionnement régulé de l'électrovanne (10) comprend la détermination d'un schéma de modulation spécifique à l'électrovanne.

12. Procédé selon la revendication 11,
**caractérisé en ce que**, lors de la détermination du profil de modulation spécifique à l'électrovanne
- les instants de début d'alimentation en courant (t_{I,ein}) pour le fonctionnement régulé de l'électrovanne (10) sont spécifiés en tenant compte du temps d'armement (t_{An}, t_{An,1}, t_{An,2}, t_{An,3}) spécifique à l'électrovanne de l'armature d'électrovanne (16) ; et/ou
- les instants d'interruption d'alimentation en courant (t_{I,aus}) pour le fonctionnement régulé de l'électrovanne (10) sont spécifiés en tenant compte du temps de descente (t_{Ab}) spécifique à l'électrovanne de l'armature d'électrovanne (16).

13. Procédé permettant de faire fonctionner plusieurs électrovannes (10), utilisées pour commander le débit, d'une machine d'épandage agricole, dans lequel les électrovannes (10) présentent respectivement une armature d'électrovanne (16) pouvant être déplacée par l'alimentation en courant de l'électrovanne (10), comportant les étapes consistant à :
- réguler le fonctionnement des électrovannes (10) ; et
- commander le débit pendant le fonctionnement régulé des électrovannes (10) lors de l'épandage de liquide sur une surface agricole utile ;
**caractérisé en ce que** le fonctionnement des électrovannes (10) est régulé au moyen d'un procédé selon l'une des revendications précédentes.

14. Procédé selon la revendication 13,
**caractérisé en ce que** les consignes d'alimentation en courant (36) spécifiques aux électrovannes pour le fonctionnement régulé des électrovannes (10) sont déterminées de telle sorte que
- les effets sur le débit des temps d'armement (t_{An}, t_{An,1}, t_{An,2}, t_{An,3}) spécifiques aux électrovannes des électrovannes (10) respectives, lesquels diffèrent les uns des autres, sont compensés ; et/ou
- les instants d'occupation de position finale (t_{EL,o}, t_{EL,o}), auxquels les armatures d'électrovannes (16) des électrovannes (10) respectives occupent une position finale (EL,o, EL,g), sont synchronisés entre eux.

15. Machine d'épandage agricole, comportant
- plusieurs électrovannes (10) (10) utilisées pour commander le débit, et
- un dispositif de commande au moyen duquel le fonctionnement des électrovannes (10) peut être régulé ;
**caractérisé en ce que** le dispositif de commande est configuré pour déclencher une régulation du fonctionnement des électrovannes (10) conformément à l'une des revendications 1 à 12 et/ou un fonctionnement des électrovannes (10) conformément à la revendication 13 ou 14.
